# EUROPÄISCHE PATENTSCHRIFT

(11) **EP 2 250 390 B1**
(45) Veröffentlichungstag und Bekanntmachung des Hinweises auf die Patenterteilung: **18.03.2015**
(21) Anmeldenummer: 08849652.6
(22) Anmeldetag: 06.11.2008
(51) Int. Cl.: F16D 65/14

(54) **SELBSTVERSTÄRKENDE BREMS- ODER BEWEGUNGS-MITNAHME EINRICHTUNG**
SELF-ENERGIZING BRAKE OR MOVEMENT CARRIER DEVICE
DISPOSITIF DE FREINAGE OU D'ENTRAÎNEMENT EN DÉPLACEMENT À AUTORENFORCEMENT

(30) Priorität: 16.11.2007 AT 18642007
(43) Veröffentlichungstag der Anmeldung: 17.11.2010
(73) Patentinhaber: VE Vienna Engineering Forschungs- und Entwicklungs GmbH, 1190 Wien (AT)
(72) Erfinder: PUTZ, Michael, A-2301 Gross Enzersdorf (AT); GRUBER, Manfred, A-3002 Purkersdorf (AT)
(74) Vertreter: Patentanwälte Pinter & Weiss OG
(86) Internationale Anmeldenummer: PCT/EP2008/065063
(87) Internationale Veröffentlichungsnummer: WO 2009/062880

(56) Entgegenhaltungen:
- GB-A- 1 053 951

## Beschreibung

Die gegenständliche Erfindung betrifft eine selbstverstärkende Brems- oder Bewegungsmitnahme-Einrichtung für drehbare oder bewegbare Komponenten von Fahrzeugen, Seilzuganlagen, Seilbahnen, Kränen, Liften, Maschinen, Generatoren, Motoren, wie insbesondere für Räder, Rollen und Scheiben , mit rotierenden oder linearen Bewegungen welche Einrichtung auf eine jeweils gewünschte bzw. gerade notwendige Brems- oder Mitnahmekraft einstellbar ist, wobei ein Verbindungsglied vorgesehen ist, das mit einem Ende am Bremsbelag oder am Mitnahmebelag oder an der Mitnahmeklaue an einem Anlenkpunkt schwenkbar angelenkt ist.

Für moderne "brake-by-wire" Bremsen ohne Hydraulik werden von Bremsen-Entwicklern und -Herstellern sich selbstverstärkende Bremsen entwickelt, und gegebenenfalls z.B. in konkreten Tests untersucht. Die bisher entwickelten und konkret hergestellten und in der Praxis untersuchten Bremsen haben den Nachteil, dass sie bei zu hoher Selbstverstärkung so blockieren, dass ein Lösen der Blockade mit den Kräften eines Stellmotors nicht mehr möglich ist.

Auf diesem Gebiet ist insbesondere die Keilbremse zu nennen, bei welcher mittels einer ausgeklügelten Regelung die Bremse bei hoher Selbstverstärkung an einem echten Blockieren gehindert wird und dadurch einen stabilen und praxisgerechten Betrieb erreichen soll, was allerdings sehr aufwändig ist.

Ziel der vorliegenden Erfindung ist es, eine rein mechanische "variable offset Bremse" zu entwickeln und hierbei ohne Einsatz einer aufwändigen elektronischen Regelung einen neuen und genau anderen Weg zu einer selbst bei Blockade die Kraft eines Stellmotors nicht übersteigende Kraft benötigte Bremse einzuschlagen.

Bisherige Bremsen zu Experimenten mit regelbarer Verstärkung mussten mit zusätzlichen Verstellern ausgestattet werden, die aufgrund der notwendigen hohen Kräfte zur Lösung einer aufgetretenen Blockierung der Bremse massiv ausgeführt werden mussten und erhebliche zusätzliche Kosten verursachten. Ein Beispiel dafür ist die DE 103 24 424 A1, die eine Reibungsbremse mit mechanischer Selbstverstärkung zeigt, bei der ein Stützhebel an einem Ende drehbar am Bremsbelag angelenkt ist und am anderen Ende eine Betätigungseinrichtung zum Verstellen des Stützhebels angreift. Der Stützhebel ist zwischen den beiden Enden drehbar an einem Bremssattel angelenkt, womit sich die Stützhebelenden bei Betätigung somit in einer Kreisbahn um diesen Drehpunkt verdrehen. Durch die Anpresskraft, mit der der Stützhebel mit dem Bremsbelag gegen die Bremsscheibe gepresst wird, entsteht über Reibung eine Mitnahmekraft, die den Stützhebel verdrehen möchte und damit stärker gegen die Bremsscheibe drückt (Selbstverstärkung). Dieses entstehende Mitnahmemoment wirkt durch den mittigen Drehpunkt auch auf das andere Stützhebelende. Die Betätigungseinrichtung muss damit in der Lage sein, die dadurch entstehenden sehr hohen Bremskräfte zu überwinden, um die Selbstverstärkung im Betrieb der Bremse verstellen zu können.

Aus der DE 101 05 752 A1 geht eine Bremse mit Selbstverstärkung hervor, bei der die Selbstverstärkung im Betrieb mit geringen Kräften verstellbar ist. Dazu ist ein Zahnrad drehbar am Bremsbelag gelagert. Im Bereich des äußeren Umfangs des Zahnrads ist am Zahnrad ein Zapfen angeordnet, der bei Betätigung der Bremse in einer Kulisse geführt ist. Am äußeren Umfang des Zahnrades greift die Betätigungseinrichtung mit einer Schnecke ein, womit das Zahnrad verdrehbar ist und die Selbstverstärkung nahezu leistungslos einstellbar ist. Eine Kulissenführung birgt jedoch eine Reihe von Nachteilen in sich, wie z.B. das Auftreten hoher Reibungskräfte, was vor allem angesichts der zu erwartenden hohen Bremskräfte im Widerspruch zum Ziel der leistungslosen Verstellung ist, oder die Verschmutzungsempfindlichkeit einer Kulissenführung, was angesichts des Bremsstaubes durch Abrieb ein Problem darstellt. Weiters sind Kulissenführungen in der Herstellung (Materialaufwand, Fertigung) aufwendig.

Bei der erfindungsgemäßen, vom Prinzip her rein mechanischen Lösung sollen konstruktionsbedingt ebenfalls keine oder nur ganz geringe Verstellkräfte nötig sein und es fallen keine zusätzlichen Kosten an, da die Momentenregelung mittels der regelbaren Kraft-Verstärkung durchgeführt wird.

Es ist also Ziel der Erfindung in erster Lesung eine sehr einfache Bremse mit rein mechanischer und praktisch "kraftloser" Verstellung der Verstärkung von deren Bremskraft zu schaffen und in zweiter Lesung wird gleichzeitig mit bzw. analog zu diesem Ziel die Schaffung einer letztlich nach dem gleichen Prinzip beruhenden Bewegungs- bzw. Drehungsmitnahme - also im Wesentlichen einer Kupplungs-Einrichtung- angestrebt.

Diese Aufgabe wird erfindungsgemäß durch die im kennzeichnenden Teil des Anspruchs 1 genannten Merkmale gelöst, also mit einer Ausführung mit Doppelhebel. Ein erster Hebel ist das Verbindungsglied vom Bremsbelag zur Radius-bzw. Kreisführungsbahn. An der Stelle einer konkreten Radiusbahn ist ein zweiter Hebel oder ein Hebelpaar mit dem ersten Hebel an deren distalen Enden miteinander gelenkig verbunden, der bzw. das im Wesentlichen zurück zum Radiusmittelpunkt führt bzw. reicht, z.B. an einem Dreh-Punkt in der Nähe des Bremsbelages am Bremssattel angelenkt ist. Mit dieser selbstverstärkenden Bremse ist die Selbstverstärkung regelbar bzw. auf jeweils gewünschte Werte einstellbar, die Dosierung des Bremsmomentes erfolgt somit durch Einstellung einer bestimmten vorgegebenen Verstärkung.

Wenn gleichmäßige Anpressung über eine Fläche, z.B. über eine Anpressscheibe erwünscht ist, dann können mehrere Abstützungen für die resultierenden Kräfte, also mehrere Verbindungsglieder zu mehreren Reibbelägen angeordnet werden. Diese Variante mit mehreren Abstützungen kann besonders vorteilhaft zur Anpressung einer Lamellenbremse verwendet werden oder zur Anpressung an Flankenwinkel bei Klauen wie oben kurz beschrieben.

Aus Gründen der Übersichtlichkeit soll nun die grundsätzliche Erläuterung der Erfindung anhand von Bremseinrichtungen erfolgen:
Bei der erfindungsgemäßen Bremse tritt prinzipbedingt das Problem des Blockierens nicht mehr auf, da im Falle zu hoher Brems-(-Selbst)Verstärkung durch die prinzipiell kraftlose Regelung die Verstärkung im Wesentlichen kraftfrei und problemlos wieder verringert werden kann.

Die erfindungsgemäß zur Anwendung gelangende mechanische Selbstverstärkung kann immer dann erreicht werden, wenn der Bremsbelag nichtrechtwinkelig zur Reibfläche hin gerichtet abgestützt bzw. mit Kraft beaufschlagt wird. Dieses Prinzip wird bei vielen Bremsen genutzt, wie z.B. bei Trommelbremsen.

Es entspricht an sich der menschlichen Erfahrung, dass z.B. ein Schneeschieber dann blockiert, wenn er zu steil, also mit zu großem Winkel zu der von Schnee und Eis zu befreienden Fläche geschoben wird und dass er problemlos wieder freigängig wird, wenn der Anstell-Winkel des Schneeschiebers flacher eingestellt, also auf geringere Werte gesenkt wird.

Wenn es also gelingt, den Abstütz -bzw. Anstellwinkel zu verändern, kann auf diese Weise die Selbstverstärkung auf jeden gewünschten Wert eingestellt werden. Diese Winkeländerung ist grundsätzlich problematisch, weil hierbei eine resultierende Widerstands-Kraft auftritt, und zwar die höchste Kraft. Dementsprechend stark mussten bisher Mechanik und Antrieb von Bremsbelägen ausgelegt werden, um eine derartige Winkeländerung vorzunehmen.

Bremsen mit verstellbarer mechanischer Selbstverstärkung in der im Anspruch 1 offenbarten Ausführungsform sind bisher nicht beschrieben und sind somit auch in Produkten nicht eingesetzt worden.

Die vorliegende Erfindung beruht nun auf einer Konstruktion, die prinzipiell nicht nur ermöglicht, sondern die kraft ihrer Ausführungsform dafür sorgt, dass der Anstellwinkel bzw. der Abstützungswinkel praktisch "kraftlos" verändert werden kann, dass also mit entsprechend schwachen und eben erstaunlich kleinen und wenig kräftigen Betätigungs- bzw. Stellmotoren in jeder Winkelposition voll wirksam gearbeitet werden kann.

Es ist schon oben erwähnt worden, dass das hier anhand einer Bremseinrichtung erläuterte Prinzip in gleicher Weise gilt, wenn z. B. die Drehbewegung einer Antriebswelle über eine Kupplung auf die Räder eines Fahrzeugs übertragen werden soll.

Demgemäß schafft die Erfindung eine neue Bewegungs- bzw. Drehungs- Brems- bzw. eine Bewegungs- bzw. Drehungs- Mitnahmeeinrichtung, wie sie im Anspruch 1 geoffenbart ist.

Im Folgenden wird die Erfindung näher erläutert.

Jede Verstellung einer Resultierenden auf einer Bahn, die normal zu dieser Resultierenden verläuft, kann praktisch "kraftlos" durchgeführt werden. Die Forderung "normal zur Resultierenden" ist immer dann erfüllt, wenn eine Kreisbahn mit dem Bremsbelag als Mittelpunkt, auf welchen sich die Resultierende abstützt, beschrieben werden kann.

Eine Kreisbahn kann z.B. durch Vorsehen einer Kreisbahn-Führungsnut erreicht werden, in welcher eine Rolle, welche am anderen Ende eines am einen Ende im "DrehMittelpunkt" im Bremsbelag schwenkbar gelagerten Abstütz-Hebels bzw. Verbindungsgliedes angeordnet ist, laufen kann. Es sei hier nicht verschwiegen, dass durchaus mechanisch günstigere Lösungen existieren, die für den gleichen Zweck eingesetzt werden können.

Im Sinne der geometrischen Verhältnisse ist die Verstellkraft eines entlang einer Kreisbahn anstellwinkel-verstellbaren Verbindungs- bzw. Abstützgliedes theoretisch Null. Praktisch sind kleine Kräfte zur Überwindung von Reibungen und in Folge nichtidealer Rechtwinkligkeit nötig. Diese können konstruktiv sehr viel kleiner sein, als die volle resultierende Kraft, daher kann sinngemäß von einer "kraftfreien" Verstellung gesprochen werden, was ja der Sinn der Kreisbogen-Führungs-Geometrie für das Abstützglied ist, das im Bremsbelag seinen Druckmittelpunkt aufweist.

Die Bezeichnung "variable offset Bremse" erscheint vielsagend, weil damit angedeutet ist, dass die Abstützung des Bremsbelages mittels eines Verbindungsgliedes in einem Abstand vom Bremsbelag erfolgt, um die gewünschte Verstärkung der Bremskraft zu erwirken und weil dieser Abstand, also Anstell-(Winkel) veränderlich ist, um eine präzise Regelung der Bremskraft zu ermöglichen.

An dieser Stelle sei kurz erläuternd ausgeführt, was die Betätigung bisher üblicher und beschriebener selbstverstärkender Bremsen betrifft:
Bei mechanisch selbstverstärkenden Bremsen, des bisherigen Standes der Technik, wie z.B. bei der "Keilbremse" wird der Bremsbelag mit kleinen Kräften durch eine Bremsen-Betätigungseinrichtung, z.B. mittels Stellmotor, an das sich zum Beispiel drehende Rad angedrückt und durch Selbstverstärkung weiter angedrückt bzw. mit der Drehung "mitgenommen". Die Größe der Selbstverstärkung hängt vom Beiwert der Reibpaarung und vom Abstützwinkel ab und kann durchaus an verschiedenen Stellen durch verschieden gefertigte Winkel für verschiedene Verstärkungen dimensioniert sein, z.B. durch "Keile" (V-Nuten) mit verschiedenen Winkeln. In einer bestimmten, vorher vorgenommenen Bremskraft-Verstärkungseinstellung ist und bleibt dieser Winkel aber immer vorgegeben und kann in dieser Situation nicht verändert werden. Genau daraus resultiert das Problem des Blockierens dieser Art von Bremsen, da genau in der jeweils herrschenden Situation die Kräfte durch die Selbstverstärkungswirkung rasch größer werden können und dadurch und mittels des relativ schwachen Stellmotors nicht mehr zu beherrschen sind. Es nützt dann nichts, dass in anderen Stellungen ohnedies andere Winkel vorliegen würden, wenn genau in der vorgegebenen, bestimmten Winkelstellung die beschriebene, sich rasch verstärkende Selbstverstärkung bis zur Blockierung eintritt und eben genau in der herrschenden Stellung infolge eines viel zu hohen Kraftaufwandes nicht mehr gelöst werden kann.

Diese Gefahr des Blockierens soll bei diesen bekannt gewordenen selbstverstärkenden Bremsen mittels einer besonderen Regelung minimiert werden, indem mittels dieser Regelung versucht wird, einfach nie in den Bereich von wie dem beschriebenen unbeherrschbar großen Stellkräften zu kommen. Die tatsächlich herrschenden Kräfte können in der Realität nicht leicht gemessen werden, da die Messung hoher Kräfte im Serienprodukt sehr teuer ist. Somit muss die Regelung bzw. Regelbarkeit und damit die Regelungseinrichtung für die bekannten selbstverstärkenden Bremsen mit Ersatzwerten der tatsächlich realen Kräfte arbeiten und ist demgemäß schwierig und aufwändig:
Es wird zuerst eine kleine Anpresskraft auf den Reib- bzw. Bremsbelag aufgebracht. Diese kann z.B. von bzw. aus Federn, Magneten, einem Motor für die Verschleißnachstellung oder aus einem gesondert dafür vorgesehenen Betätigungsmotor kommen.

Die erfindungsgemäße und die demselben zugrunde liegenden Prinzip arbeitende Bremse wird völlig anders gesteuert:
Mit dem Verstärkungsversteller, also mit dem einstellbaren Winkel α des Verbindungsgliedes zwischen Kreisbahn-Mittelpunkt am bzw. im Bremsbelag und Kreisführungsbahn wird erfindungsgemäß ein jeweils gewünschtes Bremsmoment eingestellt. Sollte dennoch eine zu hohe Selbstverstärkung oder -Blockierung der neuartigen Bremse eintreten-, Bremse und Rad blockieren natürlich gemeinsam, da miteinander verbunden, tritt ein ganz normaler "ABS-Fall" ein, wie bei allen heutigen Bremsen:
   Die ABS-Einrichtung wird sofort "reduziertes Bremsmoment" anordnen und die praktisch "kraftlose" Verstärkungsverstellung wird in den Bereich geringerer Verstärkung zurückgefahren, indem das bremsbelagsferne Ende des Verbindungsgliedes entlang der Kreisführungsbahn in Richtung zu einem geringeren Anstellwinkel α hin gefahren wird.

Ein "unlösbares Blockieren" ist durch die neuartige Art der Verstellung des Anstellwinkels α des Verbindungsgliedes durch Verschiebung von dessen belagsfernen Ende auf der Kreisführungsbahn unmöglich. Regelungen des Bremsmomentes wie sie heute üblich sind, also mit ABS und ESP sind natürlich, wie bei üblichen Bremsen weiterhin möglich.

Die "variable offset Bremse" kann z.B. durch symmetrischen Aufbau der Winkelverstellung in beide Fahrtrichtungen, also für einander dimetrale Bewegungs- bzw. Drehrichtungen, sich selbst verstärkend gebaut werden, wie dem Anspruch 2 zu entnehmen.

Eine andere Möglichkeit, z.B. bei Vorderradbremsen besteht darin, sich mit der Verstärkungswirkung ganz bewusst auf Vorwärtsfahrt zu beschränken, da die Vorderradbremsen eines PKWs für den Großteil des Bremsmoments bei Vorwärtsfahrt dimensioniert sind und bei Rückwärtsfahrt im Vergleich zur Vorwärtsdimensionierung fast kein Moment aufbringen müssen. Das kleine Restmoment könnte durch die erste kleine Anpresskraft also z.B. durch Magnetwirkung ohne Verstärkung erzeugt werden.

Die variable offset Bremse kann immer dann eingesetzt werden, wenn Selbstverstärkung durch Wahl des Anlenkpunktes also des Anstellwinkels α gewünscht ist. Daher ist das Verfahren prinzipiell für alle Bremsen geeignet, also z.B. für Scheiben-, Trommel- oder Lamellenbremsen in Fahrzeugen aller Art, also für z.B. PKW-, LKW-, Flugzeugradbremsen, Schienenfahrzeugbremsen und dgl..

Die variable offset Bremse ist prinzipiell nur daran gebunden, dass eine resultierende Kraft entsteht und diese Resultierende im Winkel α verstellt werden kann, wobei das Ziel und die Lösung in der Erreichung einer kleinen Winkelverstellkraft besteht. Dementsprechend kann die Resultierende auch durch Formgebung eines Teils der relativ zueinander zu bremsenden Teile entstehen und nicht nur durch Reibpaarung.

Die variable offset Bremse wäre in diesem Fall z.B. eine "formschlüssige Bremse", wie z.B. eine Art Klauenbremse, wobei auch hier wiederum der Vorteil besteht, die "Bremse" praktisch "kraftlos" verstellen, also öffnen und schließen zu können.

Da mit dem "variablen offset Verfahren" relative Bewegungen bzw. Drehbewegungen zueinander gebremst werden können, kann das Verfahren natürlich zur einstellbaren oder ein -und ausschaltbaren Verbindung von zwei unterschiedlich raschen Bewegungen bzw. Drehungen verwendet werden.

Prinzipbedingt ist die erfindungsgemäß erreichbare "kraftlose Verstellung" immer unter Einhaltung der "Kreisführungsbahn-Radius- und Mittelpunkt-Forderung" möglich. An sich ist jede Ausführungs-Variante, die eine Kreisbogen-Führungsbahn genügender Genauigkeit um einen genügend genau gewählten Mittelpunkt am bzw. im Bremsbelag bewirkt, für eine wie erfindungsgemäß genützte "kraftlose" Verstellung geeignet.

"Genügend genau" ist deshalb zu fordern, weil sich die Kreisführungsbahn erstens an sich nur endlich genau fertigen lässt, sich dieselbe zweitens durch die Verformungen bei hohen Kräften jedenfalls leicht ändert, drittens an sich auftretende Abweichungen in Kauf genommen werden können, um Vorteile, z.B. der Konstruktionsgeometrie, zuzulassen und viertens bewusst Abweichungen eingebaut werden können, um z.B. Betätigungsvorteile zu erlangen, also um z.B. die kleinen, jedoch notwendigen Betätigungskräfte für die "kraftlose" Verstellung der Bremskraftverstärkung regulierbar zu gestalten.

Dem Anspruch 3 ist eine weitere, im Rahmen der vorliegenden Erfindung liegende vorteilhafte Ausführungsform der neuen selbstverstärkenden Bremse zu entnehmen, zu welcher insbesondere auch auf die Zeichnungsfiguren und deren Beschreibung im Folgenden hingewiesen wird.

Anhand der Zeichnung wird die Erfindung näher erläutert:
Es zeigen die Fig. 1 das Schema einer Bremseinrichtung für die Bremsung einer Bewegung oder Drehung in nur einer Richtung gemäß dem bekannten Stand der Technik, die Fig. 2 eine ähnlich gebaute Bremseinrichtung für die Bremsung von Bewegungen oder Drehungen im zwei zueinander diametralen Richtungen gemäß dem bekannten Stand der Technik, die Fig. 3 das Schema einer Bewegungs-Mitnahmeeinrichtung, also einer Kupplung, nach dem Stand der Technik, die Fig. 4 eine erfindungsgemäße Bremse, bei welcher die Kreisführungs- bzw. die Radialführungsbahn mittels zumindest eines zweiten Radialführungshebels gewährleistet ist, welcher mit dem Verbindungsglied zwischen Bremsbacke und Radialführungsbahn schwenkverbunden ist, die Fig. 5 eine konkrete Ausführungsform einer derartigen Bremse mit zwei untereinander gelenkig verbundenen Hebeln und die Fig. 6 eine Bremse nach dem Stand der Technik, bei welcher sich der Bremsbelag auf der anderen Seite des zu bremsenden Objektes, z.B. Rades od. dgl. befindet und mittels einer Zugstange oder aber eines flexiblen Zugseiles mit der Kreis- bzw. Radialführungsbahn verbunden ist.

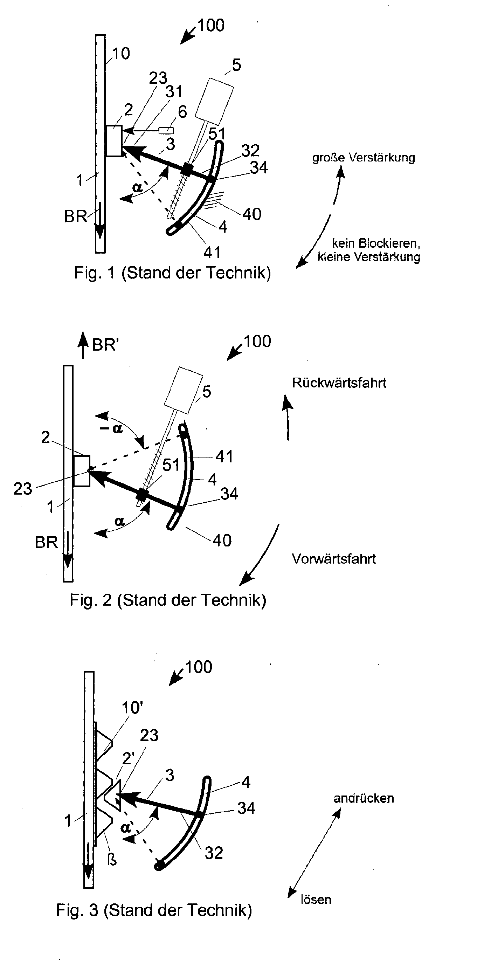

In der Fig. 1 ist gezeigt, wie an einem sich in Bewegungsrichtung BR bewegenden bzw. drehenden Objekt, wie z.B. Bremsscheibe 10 eines Rades 1, ein Bremsbelag 2 anliegt, welcher mittels schwachen Stellmotors 6 mit relativ kleiner Kraft gegen das bewegte Objekt hin bewegbar bzw. pressbar ist.

Um einen Drehpunkt = Mittelpunkt 23 am Bremsbelag 2 ist ein - hier rigider - konstante Länge aufweisender Verbindungshebel, also das Verbindungsglied 3 mit seinem Ende 31 schwenkbar gelagert. Diese Verbindungsglied 3 ist mit seinem anderen Ende 32 mittels Rolle 34 in einem bzw. einer Kreisbahnführungsschlitz bzw. -nut, welcher bzw. welche in einem feststehenden Bauteil 40, z.B. eines Automobils, eingebaut ist, kreisförmig führbar gelagert.

Mittels zweitem Stellmotor 5, hier mit Schraubspindel und Getriebe 51, ist das Verbindungsglied 3 in seiner Winkellage, also in seinem Anstellwinkel α verstellbar bzw. einstellbar.

Das Verbindungsglied 3 ist in der Fig. 1 in einer Winkelstellung α von etwa 60° gezeigt, bei welcher eine relativ große Bremskraftverstärkung erfolgt.

Mit unterbrochener Linie ist noch eine zweite Winkelstellung des konstante Länge aufweisenden Verbindungsglieds 3 bei α = etwa 30° gezeigt, bei welcher die Bremskraftverstärkung auf relativ gering eingestellt ist.

Tritt bei dieser Bremse 100 Blockierung bzw. eine Blockade ein, so bedarf es nur einer praktisch kleinen Kraft benötigenden Verschiebung des Verbindungshebels 3 in seiner Radialführungsbahn 4 in Richtung der Verkleinerung des Anstellwinkels α, z.B. mittels ABS-Einrichtung und die Blockierung ist auf völlig unspektakuläre, ganz wenig Kraft erfordernde Art und Weise gelöst und die Bremseinrichtung 100 daher sofort wieder voll funktionsfähig.

Bei sonst gleichbleibenden Bezugszeichenbedeutungen - zeigt die Fig. 2 eine Bremseinrichtung 100, bei welcher die Kreis- bzw. Radialführungsbahn 4 über die Normale, also über den Zenit bei α = 90° auf die andere Seite übergeht. Das rigide Verbindungsglied 3 ist mittels des zweiten Stellmotors 5 entlang der gesamten Kreisführungsbahn, also der Rinne, Nut od. dgl. im festen Bestandteil 40 von +α bis -α (minus α) in der Zeichnung z.B. von etwa +60° bis etwa -60° kreisbogen-verstellbar und - einstellbar.

Auf diese Weise eignet sich die Bremse gemäß Fig. 2 für die in der Bremsstärke einstellbare Bremsung von (Dreh-)Bewegungen in zueinander diametral in Richtungen BR und BR'.

Die Fig. 3 zeigt - bei sonst gleichbleibenden Bezugszeichenbedeutungen - die Funktion einer Bewegungs- bzw. Drehbewegungs-Mitnahme-, also Kupplungs-Einrichtung 100': Die Kupplungsscheibe 1 ist mit trapezartigen Klauenzähnen 10 mit Anstiegswinkel β ausgebildet. In einen der Zahn-Zwischenräume greift ein Kupplungszahn 2' ein, an dem in gleicher Weise wie in Fig. 1 und 2 am Mittel- und Drehpunkt 23 schwenkbar, der rigide Verbindungshebel 3 gelagert ist, welcher mit der Rolle 34 an seinem anderen Ende entlang der Kreis- bzw. Radialführungsbahn 4 mit dem Mittelpunkt 23 hin- und her verschiebbar ist, womit der Anstellwinkel α von - wie gezeigt - etwa 60° auf etwa 20°, hier mit unterbrochener Linie gezeichnet, reduzierbar ist, womit auch die Anpresskraft des Kupplungszahns 2' auf die Flanken der Klauenzähne 10 wesentlich reduziert ist, also die Kupplung 100' etwa gelöst ist bzw. knapp vor dem Lösen steht.

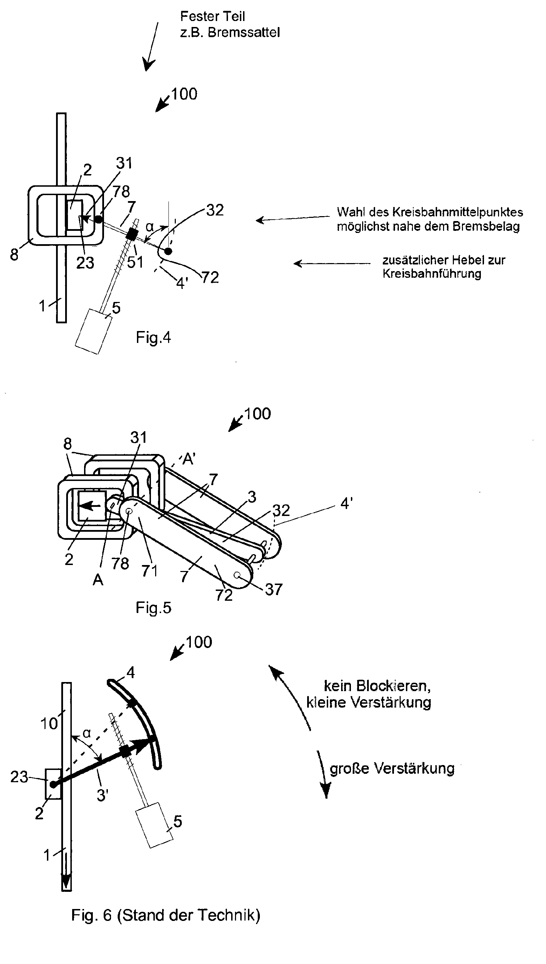

Die Fig. 4 zeigt - bei sonst gleichbleibenden Bezugszeichenbedeutungen - eine erfindungsgemäße Bremseinrichtung 100, welche eine virtuelle Kreis- bzw. Radialführungsbahn 4' aufweist, für deren reale Wirksamkeit ein zweiter rigider Hebel 7 sorgt, der an seinem freien Ende 72 mittels Gelenk an das freie Ende 32 des am anderen Ende an den Bremsbelag 2 angelenkten Verbindungshebels 3 angelenkt ist und an seinem vicinalen Ende an dem bestehenden Bremsjoch 8 mittels Gelenk 78 angelenkt ist. Wieder ist der Verbindungshebel 3 in seinem Anstellwinkel α uns somit in seiner Bremsverstärkungskraft mittels zweitem Stellmotor 5 und Getriebe 51 veränderbar.

Der rigide Hebel 7 sorgt für eine ordnungsgemäße Kreis- bzw. Radialführung 4' des Verbindungshebels 3. Der Anlenkpunkt A des Verbindungsgliedes 3 am Bremsbelag 2 ist möglichst nahe zu dem Anlenkpunkt 78 des Radial-Führungshebels 7 am Bremsjoch 8 angeordnet.

Die Fig. 5 zeigt - bei sonst gleichbleibenden Bezugszeichenbedeutungen - eine konkrete Ausführungsform der neuen Bremse 100 mit virtueller Kreis- bzw. Radialbahnführung 4', wie sie in der Fig. 4 schematisch gezeichnet ist, mit zwei an einem Ende 71 an zwei Jochteilen 8 über Anlenkpunkte 78 angelenkten zweiten Hebels 7, welche an ihrem distalen Ende 72 über eine Schwenkachse 37 mit dem Verbindungsglied 3 zum Bremsbelag 2 hin gelenkig verbunden ist.

Die Fig. 6 zeigt - bei sonst gleichbleibenden Bezugszeichenbedeutungen - eine mit einem auf Zugkraft ausgelegten Verbindungsglied 3', also z.B. einem Zugseil, einer Zugkette oder Zugstange, ausgestattete variable Offsetbremse 100, bei welcher der Bremsbelag 2 mittels Zug gegen das sich bewegende bzw. drehende Objekt 1 gedrückt wird. Hier liegt der Bremsbelag 2 in Vergleich zu den Bremsbelägen der Fig. 1 bis 3 auf der anderen Seite des sich bewegenden bzw. drehenden Objektes 1.

## Patentansprüche

1. Selbstverstärkende Brems- oder Bewegungsmitnahme-Einrichtung (100) für drehbare oder bewegbare Komponenten (1) von Fahrzeugen, Seilzuganlagen, Seilbahnen, Kränen, Liften, Maschinen, Generatoren, Motoren, wie insbesondere für Räder, Rollen und Scheiben, mit rotierenden oder linearen Bewegungen, welche Einrichtung auf eine jeweils gewünschte bzw. gerade notwendige Brems- oder Mitnahmekraft einstellbar ist, wobei ein Verbindungsglied (3) vorgesehen ist, das mit einem Ende (31) am Bremsbelag (2) oder am Mitnahmebelag oder an der Mitnahmeklaue (2') an einem Anlenkpunkt (23) schwenkbar angelenkt ist, **dadurch gekennzeichnet, dass** das andere Ende (32) des Verbindungsgliedes (3) an einem Ende eines Radial-Führungshebels (7) angelenkt ist, wobei das andere Ende des Radial-Führungshebels (7) an einem feststehenden Anlenkstück (8) an zumindest einem Hilfs-Anlenkpunkt (78) angelenkt ist, welcher möglichst nahe dem Anlenkpunkt (23) des Verbindungsgliedes (3) angeordnet ist und dass das Verbindungsglied (3) mittels Verstellantrieb (5) auf einer im Wesentlichen kreisförmigen Radial-Führungsbahn (4') um den Anlenkpunkt (23) als Mittelpunkt verdrehbar und dadurch der Anstell-Winkel (α) des Verbindungsliedes (3) änderbar ist.

2. Einrichtung nach Anspruch 1, **dadurch gekennzeichnet, dass** für ein Bremsen von Bewegungen bzw. Drehbewegungen in zwei zueinander entgegengesetzte Richtungen (BR, BR') ein Verstellantrieb (5) vorgesehen ist, mittels dessen das Verbindungsglied (3) über die Normale hinaus verdrehbar ist.

3. Einrichtung nach Anspruch 1 oder 2, **dadurch gekennzeichnet, dass** die Achse (A') des zumindest einen Hilfs-Anlenkpunktes (78) des Radial-Führungshebels (7) am feststehenden Anlenkstück (8) im Wesentlichen in einer Fortsetzung der Achse (A) des Anlenkpunktes (23) des Verbindungsgliedes (3) angeordnet ist.

## Claims

1. Self-energizing braking or movement driving device (100) for rotatable or movable components (1) of vehicles, cable-pull systems, cable cars, cranes, lifts, machines, generators, motors, such as, in particular, for wheels, rollers, and disks, with rotating or linear movements, which device can be adjusted to a braking or driving force that is desired or required at a specific time, in each instance, wherein a connection element (3) is provided, which is articulated, in pivoting manner, onto the brake lining (2) or onto the driver lining or onto the driver claw (2') with one end (31), at an articulation point (23), **characterized in that** the other end (32) of the connection element (3) is articulated onto an end of a radial guide lever (7), wherein the other end of the radial guide lever (7) is articulated onto a fixed articulation piece (8), at at least one auxiliary articulation point (78), which point is arranged as close as possible to the articulation point (23) of the connection element (3), and that the connection element (3) can be rotated about the articulation point (23) as a center point, by means of an adjustment drive (5), on a radial guide track (4') that is substantially circular in shape, and thereby the setting angle (α) of the connection element (3) can be changed.

2. Device according to claim 1, **characterized in that** an adjustment drive (5) is provided for braking of movements or rotational movements in two opposite directions (BR, BR'), by means of which drive the connection element (3) can be rotated beyond the perpendicular.

3. Device according to claim 1 or 2, **characterized in that** the axis (A') of the at least one auxiliary articulation point (78) of the radial guide lever (7) is arranged on the fixed articulation piece (8) substantially as a continuation of the axis (A) of the articulation point (23) of the connection element (3).

## Revendications

1. Dispositif de freinage ou d'entraînement en mouvement à renforcement automatique (100) pour des composants rotatifs ou mobiles (1) de véhicules, de systèmes de traction à câble, de téléphériques, de grues, d'ascenseurs, de machines, de générateurs, de moteurs, en particulier pour des roues, des rouleaux et de disques, avec des mouvements rotatifs ou linéaires, ledit dispositif pouvant être réglé sur une force de freinage ou d'entraînement respectivement souhaitée ou précisément nécessaire, dans lequel il est prévu un organe de liaison (3) articulé de façon pivotante par une extrémité (31) à un point d'articulation (23) sur la plaquette de frein (2) ou sur la garniture d'entraînement ou sur une griffe d'entraînement (2'), **caractérisé en ce que** l'autre extrémité (32) de l'organe de liaison (3) est articulée à une extrémité d'un levier de guidage radial (7), l'autre extrémité du levier de guidage radial (7) étant articulé au moins à un point d'articulation auxiliaire (78), lequel est situé au plus près du point d'articulation (23) de l'organe de liaison (3), et **en ce que** l'organe de liaison (3) peut tourner autour du point d'articulation (23) en tant que point central, sur une voie de guidage radiale (4') essentiellement circulaire, au moyen d'un entraînement de réglage (5), ce qui permet de modifier l'angle d'inclinaison (α) de l'organe de liaison (3).

2. Dispositif selon la revendication 1, **caractérisé en ce que** pour un freinage de mouvements ou de mouvements de rotation dans deux directions (BR, BR') opposées, il est prévu un entraînement de réglage (5) au moyen duquel l'organe de liaison (3) peut être tourné au-delà de la normale.

3. Dispositif selon la revendication 1 ou 2, **caractérisé en ce que** l'axe (A') de l'au moins un point d'articulation auxiliaire (78) du levier de guidage radial (7) sur la pièce d'articulation immobile (8) est agencé essentiellement dans un prolongement de l'axe (A) du point d'articulation (23) de l'organe de liaison (3).
